# EUROPÄISCHE PATENTSCHRIFT

(11) **EP 0 535 174 B1**
(45) Veröffentlichungstag und Bekanntmachung des Hinweises auf die Patenterteilung: **24.01.1996**
(21) Anmeldenummer: 92903925.3
(22) Anmeldetag: 13.02.1992
(51) Int. Cl.: B60T 8/36

(54) **ELEKTROMAGNETVENTIL, INSBESONDERE FÜR SCHLUPFGEREGELTE KRAFTFAHRZEUGBREMSANLAGEN**
SOLENOID VALVE DESIGNED IN PARTICULAR FOR SLIP-CONTROLLED VEHICLE-BRAKE SYSTEM
ELECTROVANNE, EN PARTICULIER POUR SYSTEMES DE FREINAGE ANTIPATINAGE POUR VEHICULES AUTOMOBILES

(30) Priorität: 19.04.1991 DE 4112920
(43) Veröffentlichungstag der Anmeldung: 07.04.1993
(73) Patentinhaber: ITT Automotive Europe GmbH, D-60488 Frankfurt (DE); ALFRED TEVES METALLWARENFABRIK GMBH & CO. OHG, D-51702 Bergneustadt (DE)
(72) Erfinder: VOLZ, Peter, D-6100 Darmstadt (DE); TIMMERMANS, Marc, B-1755 Leerbeek (BE)
(86) Internationale Anmeldenummer: EP9200308
(87) Internationale Veröffentlichungsnummer: WO9218362

(56) Entgegenhaltungen:
- EP-A- 0 361 502
- DE-A- 3 913 352
- US-A- 4 844 119

## Beschreibung

Die Erfindung betrifft ein Elektromagnetventil, insbesondere für schlupfgeregelte Kraftfahrzeugbremsanlagen nach dem Oberbegriff des Anspruchs 1.

Elektromagnetventile zur Steuerung und Regelung von Druckmedien finden in der Industriehydraulik ein vielfältiges Anwendungsspektrum. Ebenso kommt der Verwendung von Elektromagnetventilen für die Fahrzeugausrüstung eine besondere Stellung zu, da selbst bei außergewöhnlichen Einsatzbedingungen die Druckmittelströme mit hoher Präzision zu regeln sind.

Besonders bei der Integration von Elektromagnetventilen innerhalb des Fahrzeugbereichs sind über die eigentliche Funktionstauglichkeit hinaus zusätzliche aktive wie auch passive Maßnahmen zu berücksichtigen, die dem Komfortbestreben hinsichtlich Servicefreundlichkeit und Geräuscharmut der jeweils elektromagnetisch ventilgesteuerten Anlage dienlich sind.

Hinsichtlich der angestrebten Geräuscharmut sei beispielsweise auf die gemäß der DE-OS 39 13 352 bekannte Anordnung von Druckpulsationsdämpfer innerhalb eines Ventilblocks für eine schlupfgeregelte Bremsanlage verwiesen. Diese Druckpulsationsdämpfer absorbieren in Abhängigkeit ihrer elastischen Verformungseigenschaften die von den Schaltfrequenzen der Elektromagnetventile herrührenden Schallemissionen, so daß der als störend empfundene Geräuschpegel abgesenkt werden kann. Nachteilig anzusehen ist jedoch, daß bei diesem Verfahren eine elastische Verformung des Druckpulsationsdämpfers zwangsläufig auch zu einer unerwünschten Vergrößerung der Druckmittelvolumenaufnahme führt.

Daher ist es die Aufgabe der Erfindung, unter Beibehaltung eines möglichst unveränderten einfachen Aufbaus der Elektromagnetventile einen Lösungsweg aufzuzeigen, der den von den Schaltstellungen der Elektromagnetventile abhängige Geräuschpegel und dessen Fortpflanzung wirkungsvoll reduziert, ohne eine zusätzliche Volumenaufnahme während des Betriebseinsatzes hinnehmen zu müssen.

Diese Aufgabe wird erfindungsgemäß durch die den Patentanspruch 1 kennzeichnenden Merkmale gelöst.

Die Erfindung basiert somit auf dem Gedanken, ein im Ventilaufnahmekörper integrierter volumen- bzw. druckregulierender Reglerkolben zwischen dem Druckmittelanschluß der Druckmittelquelle und dem Ventilschließglied des in der Grundstellung stromlos offen geschalteten Elektromagnetventils anzuordnen, wobei die am Reglerkolben wirksame Steuerkante den Druckmittelstrom in Abhängigkeit des Kolbenhubs einstellt.

Durch die in den Unteransprüchen aufgeführten Maßnahmen werden zweckmäßige Ausbildungen und Verbesserungen der Erfindung angegeben. Diese konstruktive Maßnahmen sowie die weiteren Merkmale und Vorteile der beanspruchten Erfindung werden nachfolgend an Hand mehrerer Zeichnungen näher dargestellt und erläutert.

Es zeigen:
- Figur 1: einen Querschnitt durch eine aus einem Elektromagnetventil und einem Mengenregler gebildete Ventileinheit,
- Figur 2: eine vergrößerte Darstellung des in Figur 1 gezeigten Mengenreglers,
- Figur 3: ein Meßprotokoll zur Darstellung des Volumenstroms als Funktion des Druckes,
- Figur 4: ein weiteres Diagramm zur Darstellung des Pulsvolumens als Funktion der Pulslänge infolge elektromagnetischer Erregung des Ventils.

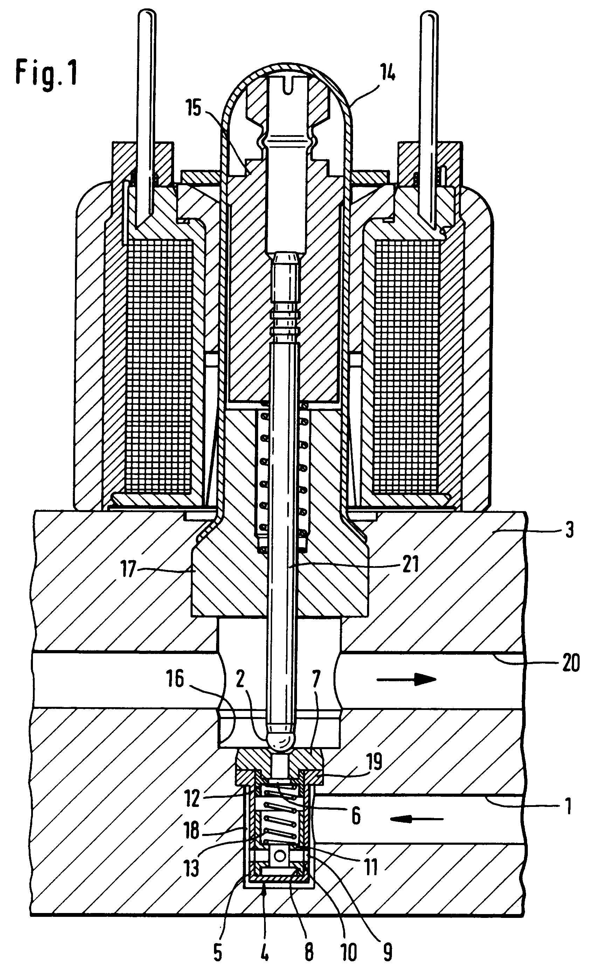

Die Figur 1 zeigt
im Querschnitt das Elektromagnetventil mit dem koaxial zum Ventilstößel 13 angeordneten Mengenregler 4. Das Elektromagnetventil weist einen in einer Ventilhülse 14 geführten Magnetanker 15 auf, an dem sich der Ventilstößel 21 in den Ventilaufnahmekörper 3 erstreckt. Auf dem dem Magnetanker 15 abgewandten Stößelende befindet sich ein kugelförmiges Ventilschließglied 2, das in der elektromagnetisch nicht erregten Stellung am Ventilsitz 7 einen geöffneten Ringspaltquerschnitt bildet. Die Ventilhülse 14 ist in ihrem offenen Endbereich mit einem Magnetkern 17 im Ventilaufnahmekörper 3 verstemmt. In der Zeichnung unterhalb des Ventilsitzes 7 dargestellt, befindet sich in einer Verlängerung der ventilsitzaufnehmenden Stufenbohrung 16 der Mengenregler 4. Der Mengenregler 4 weist ein topfförmiges Reglergehäuse 5 auf, dessen Mantelfläche gegenüber dem Ventilaufnahmekörper 3 von einem Ringraum 18 begrenzt ist, um eine einfache Druckmittelzufuhr über den von der Druckmittelquelle - beispielsweise über einen Tandemhauptzylinder oder eine Pumpe - kommenden ersten Druckmittelanschluß 1 zu den die Steuerkanten 10 aufweisenden Druckmitteldurchlässe 9 zu gewährleisten. Die vorbeschriebenen Druckmitteldurchlässe 9 sind im Endbereich der topfförmig auslaufenden Umfangsfläche des Reglergehäuses 5 angeordnet. In gleicher Lage befinden sich die Druckmitteldurchlässe des Reglerkolbens 8, solange dieser unter Einwirkung einer Druckfeder 13 in Anlage am topfförmigen Abschluß des Reglergehäuses 5 verharrt. Die Druckfeder 13 ist durch eine im Inneren des Reglerkolbens 8 und im Inneren des Einsatzteils 12 ausgebildeten Absatz 11 eingespannt. Wegen der koaxialen Ausrichtung des Mengenreglers 4 gegenüber dem Ventilstößel 13 bedarf es lediglich einer Verlängerung der Stufenbohrung 16, um den am Reglergehäuse 5 angebrachten Kragen bzw. Bund 19 zwischen dem als separates Teil in den Ventilaufnahmekörper 3 einzufügenden Ventilsitz 7 und der Stufenbohrung 16 einzuklemmen. Dabei erweist es sich als zweckmäßig, den Absatz 11 im Inneren des Einsatzteils 12 zu Abstützung der Druckfeder 13 zu verwenden. In der abbildungsgemäß offenen Ventilschaltstellung besteht folglich über den ersten Druckmittelanschluß 1, den Ringraum 18, die Druckmitteldurchlässe 9 und über die Bohrung im Einsatzteil 12 eine ungehinderte hydraulische Verbindung zum zweiten verbraucherseitigen Druckmittelanschluß 20.

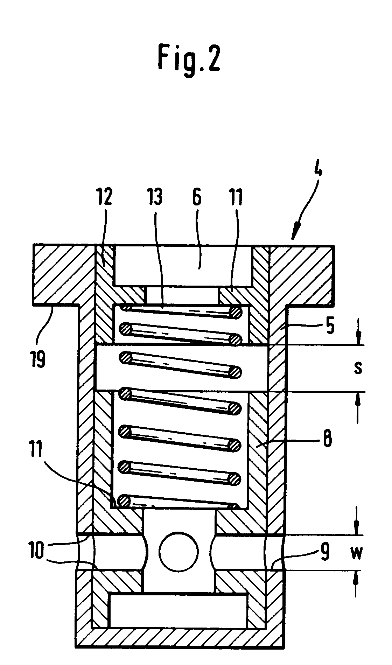

Die Figur 2 zeigt
eine vergrößerte Ansicht des Mengenreglers 4 im Querschnitt. Wie bereits einleitend beschrieben wurde, befindet sich die Druckfeder 13 koaxial zwischen den Absätzen 11 des Reglerkolbens 8 und des Einsatzteils 12 eingespannt im Reglergehäuse 5. Das Reglergehäuse 5 weist zur Befestigung im Ventilaufnahmekörper auf der geöffneten Stirnseite den eingangs erwähnten Bund 19 auf. Das Einsatzteil 12 weist einen im wesentlichen buchsenförmigen und sich in Umfangsrichtung nach innen erstreckenden Absatz 11 auf. Die Druckmitteldurchlässe 9 sind symmetrisch über den Umfang des Reglergehäuses 5 und des Reglerkolbens 8 verteilt.

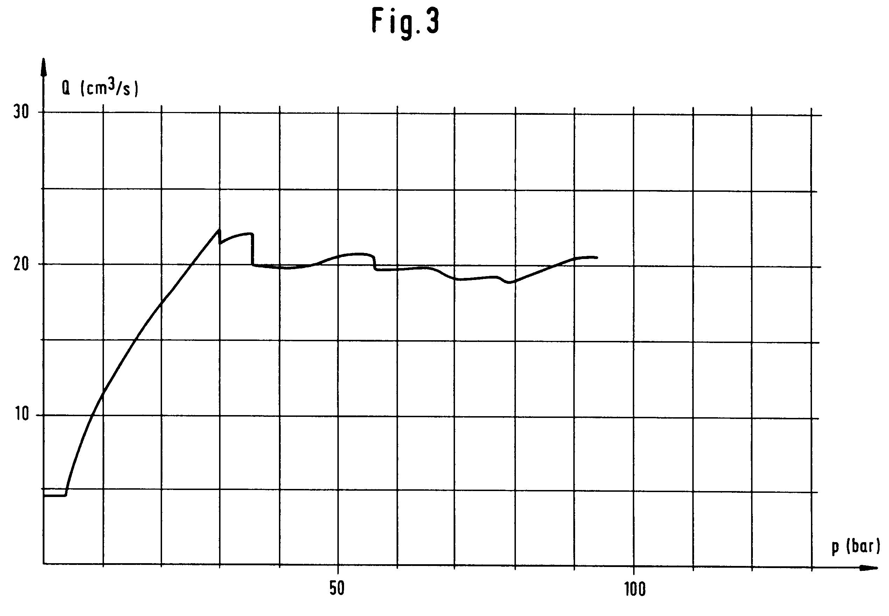

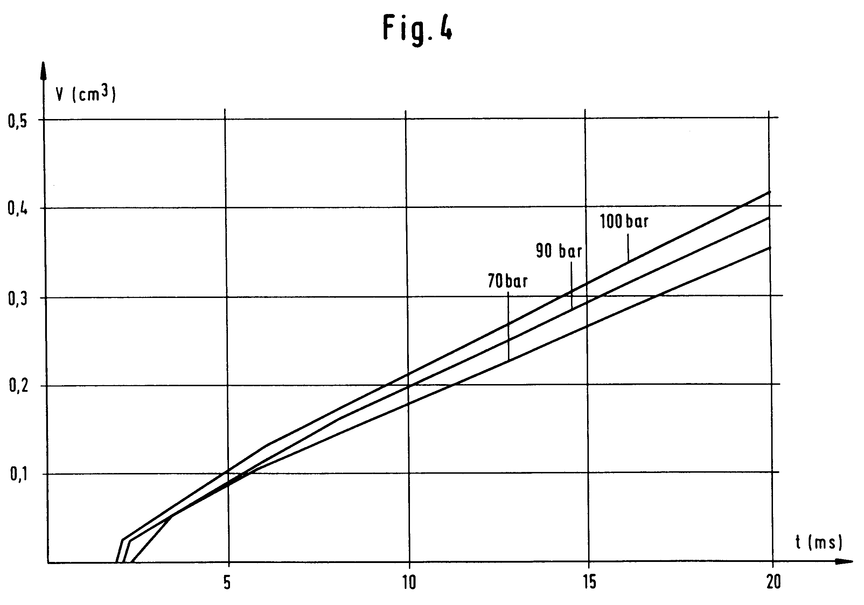

Die Figuren 3 und 4 zeigen
Meßdiagramme zur Volumenstromregelung in Abhängigkeit vom hydraulischen Druck bzw. von der Ventilöffnungszeit.

Der Kennlinienverlauf von Figur 3 verdeutlicht entlang der Abszisse die Betriebsdrücke, während die Ordinate den Volumenstrom als Funktion des entlang der Abszisse aufgetragenen Druckes zeigt. Hierbei geht aus dem Diagramm hervor, daß während der Volumenstromregelung und der folglich stattfindenden Hubbewegung des Reglerkolbens bereits ab einem Druck von etwa 30 bar der gewünschte Volumenstrom von ca. 20 ccm/sek. nahezu konstant und damit unabhängig von etwaigen Druckveränderungen eingehalten werden kann.

Das Diagramm gemäß Figur 4 zeigt auf der Ordinate aufgetragen das Pulsvolumen als Funktion der auf der Abszisse aufgetragenen Pulslänge des Elektromagnetventils.Die zugehörigen Kennlinien stellen unterschiedliche Betriebsdrücke (70, 90, 100 bar ) dar. Hierbei zeigt sich, daß unter Betrachtung gleicher Pulslängen ein nahezu von differierenden Betriebsdrücken unabhängiges konstantes Pulsvolumen einregulierbar ist, so daß die hohen Anforderungen an den Mengenregler hinsichtlich der Regelgüte uneingeschränkt erfüllt werden.

### Funktionsweise:

Nachfolgend wird unter Bezug auf die zuvor erläuterten Abbildungen die Wirkungsweise des Mengenreglers in Abhängigkeit der jeweiligen Ventilschaltstellung beschrieben.

In der offenen Ventilschaltstellung besteht eine ungeregelte Druckmittelverbindung von der Druckmittelquelle, beispielsweise von einem Bremsdruckgeber, in den Ringraum 18 des Ventilaufnahmekörpers 3, so daß bei relativ geringem Druck und Volumenstrom die Druckmitteldurchlässe 9 vollständig geöffnet das Druckmittel ungehindert zur Öffnung des Einsatzteiles 12 und damit über den geöffneten Ventilsitz 7 zum zweiten Druckmittelanschluß 19 gelangen lassen, um den Druckmittelverbraucher, beispielsweise eine Radbremse, zu beaufschlagen. Nach Bernoulli entsteht dabei jedoch innerhalb des Reglerkolbens 8 bei Zunahme der Dynamik der Flüssigkeitssäule in Strömungsrichtung ein Druckgefälle, das vom Betrag her größer ist, als der auf den Reglerkolben 8 gerichtete Anpreßdruck der Druckfeder 13. Zwangsläufig vollzieht der Reglerkolben 8 infolge der Sogwirkung eine der Druckfeder 13 entgegengerichtete Hubbewegung, die zumindest zur teilweisen Überdeckung der Druckmitteldurchlässe 9 und damit zur Regelung des Volumenstroms während der elektromagnetisch erregten offenen Ventilschaltstellung führt.

Sobald das Ventilschließglied 2 die Druckmittelverbindung zwischen dem ersten und dem zweiten Druckmittelanschluß (1,20) mangels Stromerregung des Elektromagnetventils unterbricht, gelangt infolge des Druckausgleichs innerhalb des Reglerkolbens 8 dieser unter Einwirkung der Druckfeder 13 in Anlage an den topfförmigen Stirnbereich des Reglergehäuses 5. Hierbei gibt der Durchlaß 9 bis zum erneuten Einsetzen eines elektrischen Ventilschaltimpulses den maximalen Durchlaßquerschnitt frei.

Zusammenfassend wird darauf verwiesen, daß in Bezugnahme auf die eingangs erwähnte Geräuschdämpfungsmaßnahme der beanspruchte Mengenregler sich nicht nur durch die Eliminierung der Ventilschaltgeräusche auszeichnet, sondern auch einen im Gegensatz zu den gebräuchlichen Mengenreglern kleinen und insbesondere bei Verwendung von Kunststoffteilen einen massereduzierten Aufbau aufweist, da im besonderen auch innerhalb des Reglerkolbens auf das Erfordernis der bei Volumenstromreglern üblicherweise gebräuchlichen Festblenden verzichtet werden kann. Damit sind bei minimaler Trägheit des Reglerkolbens die Voraussetzungen für einen möglichst verlustfreien Strömungsdurchsatz und die Voraussetzung für eine entsprechende Regelschnelligkeit geschaffen, ohne dabei maßgebliche Veränderungen am Elektromagnetventil vornehmen zu müssen. Zwangsläufig folgt daraus für das Gesamtsystem eine gravierende Verbesserung der Regelgüte, unabhängig von der jeweiligen angeschlossenen hydraulischen Anlage. Darüber hinaus lassen sich erhebliche Einsparungen hinsichtlich der Auslegung der die Elektromagnetventile schaltenden Leistungselektronik erzielen.

### Bezugszeichenliste:

- 1: erster Druckmittelanschluß
- 2: Ventilschließglied
- 3: Ventilaufnahmekörper
- 4: Mengenregler
- 5: Reglergehäuse
- 6: Öffnung
- 7: Ventilsitz
- 8: Reglerkolben
- 9: Druckmitteldurchlaß
- 10: Regelungskante
- 11: Absatz
- 12: Einsatzteil
- 13: Druckfeder
- 14: Ventilhülse
- 15: Magnetanker
- 16: Stufenbohrung
- 17: Magnetkern
- 18: Ringraum
- 19: Bund
- 20: zweiter Druckmittelanschluß
- 21: Ventilstößel

## Patentansprüche

1. Elektromagnetventil, insbesondere für schlupfgeregelte Kraftfahrzeugbremsanlagen, mit einem in einem Ventilaufnahmekörper (3) geführten und an einem Magnetanker angebrachten Ventilschließglied (2), das in Abhängigkeit von seiner Position eine Verbindung zwischen einem mit einer Druckmittelquelle verbundenen ersten Druckmittelanschluß (1) und einem einem Druckmittelverbraucher zugeordneten zweiten Druckmittelanschluß (20) herstellt, dadurch **gekennzeichnet**, daß ein wirkungsmäßig sowie baulich in Reiheschaltung zwischen dem ersten Druckmittelanschluß (1) und dem Ventilschließglied (2) in den Ventilaufnahmekörper (3) integrierter Mengenregler (4) in der offenen Ventilschaltstellung eine Regelung des Druckmittelvolumens vollzieht, wobei der Mengenregler (4) einen Reglerkolben (8) aufweist, der koaxial zu einer das Ventilschließglied (2) aufnehmenden Stufenbohrung (16) angeordnet ist und der mit einer Regelungskante (10) einen Durchlaßquerschnitt für das Druckmittelvolumen in Abhängigkeit des Kolbenhubs einstellt.

2. Elektromagnetventil nach Anspruch 1, dadurch **gekennzeichnet**, daß der Mengenregler (4) aus einem topfförmigen Reglergehäuse (5) gebildet ist, dessen Öffnung (6) unmittelbar einem mit dem Ventilschließglied (2) korrespondierenden Ventilsitz (7) zugewandt ist.

3. Elektromagnetventil nach Anspruch 1 oder 2, dadurch **gekennzeichnet**, daß in die Öffnung (6) ein im wesentlichen hülsenförmig gestalteter Reglerkolben (8) längsbeweglich eingeführt ist, der über seine Länge einen ungedrosselten Durchströmungsquerschnitt aufweist.

4. Elektromagnetventil nach mindestens einem der vorhergehenden Ansprüche, dadurch **gekennzeichnet**, daß der Reglerkolben (8) und das Reglergehäuse (5) im Endbereich der dem Ventilschließglied (2) abgewandten Mantelflächen radiale Druckmitteldurchlässe (9) aufweisen, die zur Einhaltung eines konstanten Volumenstroms miteinander korrespondierende Regelungskanten (10) aufweisen.

5. Elektromagnetventil nach mindestens einem der vorhergehenden Ansprüche 1 bis 4 dadurch **gekennzeichnet**, daß die Öffnung des Reglerkolbens (8) im Bereich der Druckmitteldurchlässe (9) mittels eines bundförmig verlaufenden Absatzes (11) verengt ist.

6. Elektromagnetventil nach mindestens einem der vorhergehenden Ansprüche, dadurch **gekennzeichnet**, daß zwischen dem Absatz (11) und einem koaxial dem Reglerkolben (8) gegenüberliegenden Einsatzteil (12) eine Druckfeder (13) eingespannt ist.

7. Elektromagnetventil nach mindestens einem der vorhergehenden Ansprüche, dadurch **gekennzeichnet**, daß zwischen dem Einsatzteil (12) und dem Reglerkolben (8) ein axialer Abstand (s) gebildet ist, der in Hubrichtung des Reglerkolbens (8) zumindest der kleinsten lichten Weite (w) der Druckmitteldurchlässe (9) entspricht.

## Claims

1. A solenoid valve, in particular for slip-controlled brake systems of automotive vehicles, comprising: a valve closure member (2) guided in a valve accommodating body (3) and provided at an armature which, in dependence on its position, establishes a communication between a first pressure medium connection (1) connected with a pressure medium source and a second pressure medium connection (20) associated with a pressure medium consumer,
**characterized** in that a volume governor (4), which, by way of series connection both in terms of operation and construction, is integrated in the valve accommodating body (3) between the first pressure medium connection (1) and the valve closure member (2), provides a pressure medium volume control in the valve's open position, with the volume governor (4) having a control piston (8) which is arranged coaxially relative to a stepped bore (16) accommodating the valve closure member (2), and the control piston with a control edge (10) adjusting a passage cross-section for the pressure medium volume in response to the piston stroke.

2. A solenoid valve as claimed in claim 1,
**characterized** in that the volume governor (4) includes a cup-shaped governor housing (5), the opening (6) of the housing directly facing a valve seat (7) cooperating with the valve closure member (2).

3. A solenoid valve as claimed in claim 1 or in claim 2,
**characterized** in that an essentially sleeve-shaped control piston (8) is introduced into the opening (6) so as to be longitudinally movable, with an unthrottled flow passage over its entire length.

4. A solenoid valve as claimed in at least one of the preceding claims,
**characterized** in that, in the end area of their surfaces averted from the valve closure member (2), the control piston (8) and the governor housing (5) have radial pressure medium passages (9) which, for maintaining a constant volume flow, are provided with control edges (10) cooperating with each other.

5. A solenoid valve as claimed in at least one of the preceding claims 1 through 4,
**characterized** in that, in the area of the pressure medium passages (9), the opening of the control piston (8) is narrowed by means of a shoulder (11) spreading like a collar.

6. A solenoid valve as claimed in at least one of the preceding claims,
**characterized** in that a compression spring (13) is clamped between the shoulder (11) and an insert (12) lying coaxially opposite the control piston (8).

7. A solenoid valve as claimed in at least one of the preceding claims,
**characterized** in that, between the insert (12) and the control piston (8), an axial distance (s) is formed which, in the direction of the stroke of the control piston (8), corresponds to at least the smallest inside width (w) of the pressure medium passages (9).

## Revendications

1. Valve à commande électromagnétique, notamment pour système de freinage antiblocage de véhicule automobile, comprenant un obturateur de valve (2) qui est guidé dans un corps de logement de valve (3) et est monté sur une armature magnétique et qui, en fonction de sa position, produit une liaison entre un premier raccord d'agent de pression (1), relié à une source d'agent de pression, et un second raccord d'agent de pression (20) associé à un utilisateur d'agent de pression, caractérisée en ce que, dans la position de commutation ouverte de la valve, un régulateur de débit (4), qui est intégré dans le corps de logement de valve (3) suivant un montage en série, à la fois sur le plan fonctionnel et sur le plan structurel, entre le premier raccord d'agent de pression (1) et l'obturateur de valve (2), assure une régulation du volume d'agent de pression, le régulateur de débit (4) comportant un piston de régulateur (8) qui est disposé suivant le même axe qu'un alésage étagé (16) servant à loger l'obturateur de valve (2) et qui, par une arête de régulation (10), assure le réglage d'une section de passage pour le volume d'agent de pression en fonction de la distance parcourue par le piston.

2. Valve à commande électromagnétique selon la revendication 1, caractérisée par ce que le régulateur de débit (4) est formé d'un boîtier de régulateur (5) en forme de gobelet dont l'ouverture (6) fait directement face à un siège de valve (7) correspondant à l'obturateur de valve (2).

3. Valve à commande électromagnétique selon la revendication 1 ou 2, caractérisée en ce qu'un piston de régulateur (8) pratiquement en forme de manchon est inséré d'une manière mobile dans le sens longitudinal dans l'ouverture (6), ce piston de régulateur (8) comportant sur toute sa longueur une section offerte à l'écoulement qui ne présente pas d'étranglement.

4. Valve à commande électromagnétique selon au moins l'une des revendications précédentes, caractérisée en ce que, dans la partie d'extrémité de leur surface périphérique située à l'opposé de l'organe obturateur de valve (2), le piston de régulateur (8) et le boîtier de régulateur (5) comportent des passages radiaux d'agent de pression (9) qui, en vue du maintien d'un débit volumique constant, comportent des arêtes de régulation (10) se correspondant entre elles.

5. Valve à commande électromagnétique selon au moins l'une des revendications précédentes 1 à 4, caractérisée en ce que, dans la zone des passages d'agent de pression (9), l'ouverture du piston de régulateur (8) est rétréci au moyen d'un rebord (11) s'étendant en forme de collerette.

6. Valve à commande électromagnétique selon au moins l'une des revendications précédentes, caractérisée en ce qu'un ressort de compression (13) est placé sous contrainte entre le rebord (11) et une pièce insérée (12) qui est disposée suivant le même axe et qui fait face au piston de régulateur (8).

7. Valve à commande électromagnétique selon au moins l'une des revendications précédentes, caractérisée en ce qu'une distance axiale (s) est formée entre la pièce insérée (12) et le piston de régulateur (8), cette distance axiale correspondant, suivant la direction de déplacement du piston de régulateur (8), au moins à la plus petite dimension d'ouverture libre (w) des passages d'agent de pression (9).
